# EUROPEAN PATENT APPLICATION

(11) **EP 4 572 165 A1**
(43) Date of publication of application: **18.06.2025**
(21) Application number: 23852821.0
(22) Date of filing: 28.07.2023
(51) Int. Cl.: H04B 7/0452, H04W 72/23, H04W 72/04, H04W 72/20, H04L 5/00, H04L 1/00, H04W 84/12

(54) **METHOD AND DEVICE FOR CARRYING OUT MULTI-LAYER TRANSMISSION IN WIRELESS LAN SYSTEM**

(30) Priority: 09.08.2022 KR 20220099452; 09.08.2022 KR 20220099474
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR)
(74) Representative: Plasseraud IP
(86) International application number: PCT/KR2023/011053
(87) International publication number: WO 2024/034940

(57) **Abstract**

Disclosed are a method and a device for carrying out multi-layer transmission (MLT) in a wireless LAN system. A method carried out by a first station (STA) in a wireless LAN system, according to one embodiment of the present disclosure, may comprise the steps of: receiving, from a second STA, a physical layer protocol data unit (PPDU) including a SIG field associated with MLT; and processing MLT-based data by decoding the SIG field. Here, the SIG field includes information indicating whether to apply the MLT, and on the basis that the MLT is applied, a user field for a first STA included in the SIG field may include at least one subfield for processing the MLT-based data.

## Description

### [TECHNICAL FIELD]

The present disclosure relates to a method and device for performing multi-layer transmission (MLT) in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or realtime traffic. Furthermore, new technologies are being discussed to support ultra high reliability (UHR), including improvements or extensions of EHT technologies.

### [Disclosure]

### [Technical Problem]

A technical object of the present disclosure is to provide a method and device for performing multi-layer transmission (MLT) in a wireless LAN system.

A technical object of the present disclosure is to provide a method and device for designing a SIG field including a common field and a user field for configuring/indication MLT.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving a physical layer protocol data unit (PPDU) including a SIG field related to multi-layer transmission (MLT) from a second STA; and processing MLT-based data by decoding the SIG field. Herein, the SIG field may include information indicating whether the MLT is applied, and based on the MLT being applied, a user field for the first STA included in the SIG field may include at least one subfield for processing the MLT-based data.

A method performed by a second station (STA) in a wireless LAN system according to an additional aspect of the present disclosure may comprise: constructing a physical layer protocol data unit (PPDU) including a SIG field related to multi-layer transmission (MLT); and transmitting the PPDU to a first STA. Herein, the SIG field may include information indicating whether the MLT is applied, and, based on the MLT being applied, a user field for the first STA included in the SIG field may include at least one subfield for processing MLT-based data.

### [Technical Effects]

According to the present disclosure, a method and device for performing multi-layer transmission (MLT) in a wireless LAN system may be provided.

According to the present disclosure, a method and device for designing a SIG field including a common field and a user field for configuring/indicating MLT may be provided.

According to the present disclosure, by superposing and transmitting data for a plurality of STAs, channel capacity for allocated bandwidth and resources may be increased, and there is an advantage that signal transmission for more STAs may be enabled.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for explaining the operation of the first STA in the MLT operation according to the present disclosure.
FIG. 9 is a diagram for explaining the operation of the second STA in the MLT operation according to the present disclosure.
FIG. 10 illustrates a format for an EHT PHY capability information field according to an embodiment of the present disclosure.
FIG. 11 illustrates an example of a transmission procedure for MLT according to the present disclosure.
FIG. 12 illustrates an example of a reception procedure for MLT according to the present disclosure.
FIG. 13 illustrates another example of a reception procedure for MLT according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

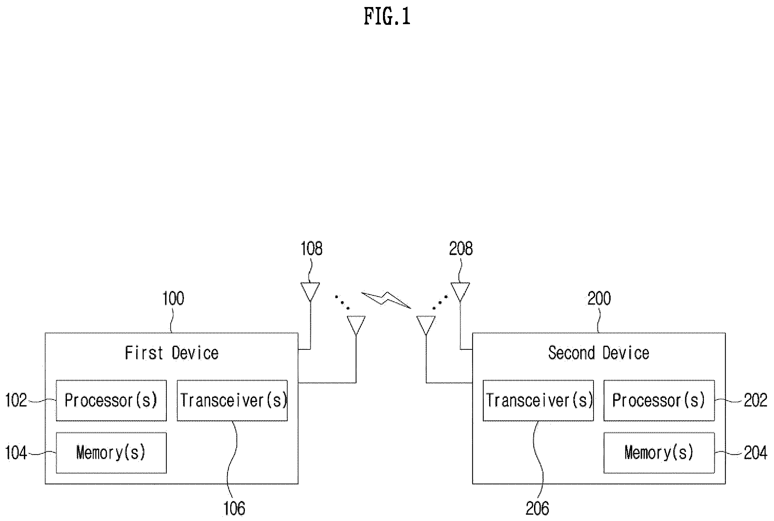

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internetof-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

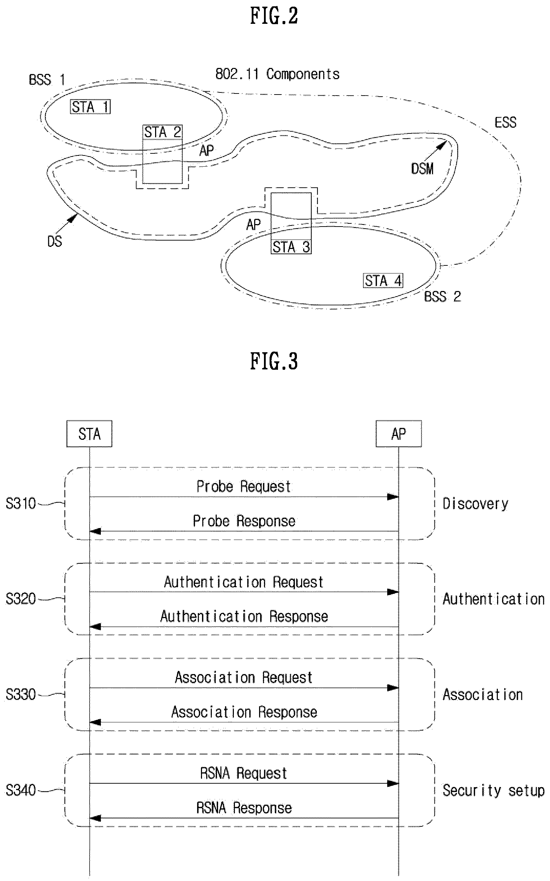

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

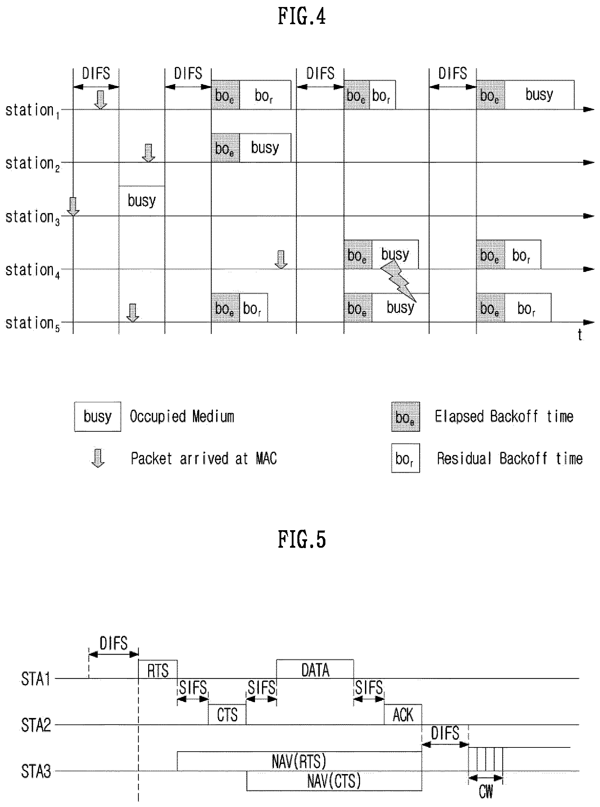

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a pollingbased synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

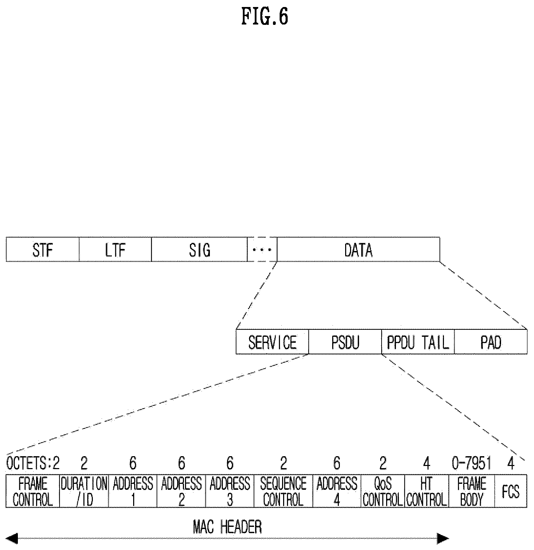

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

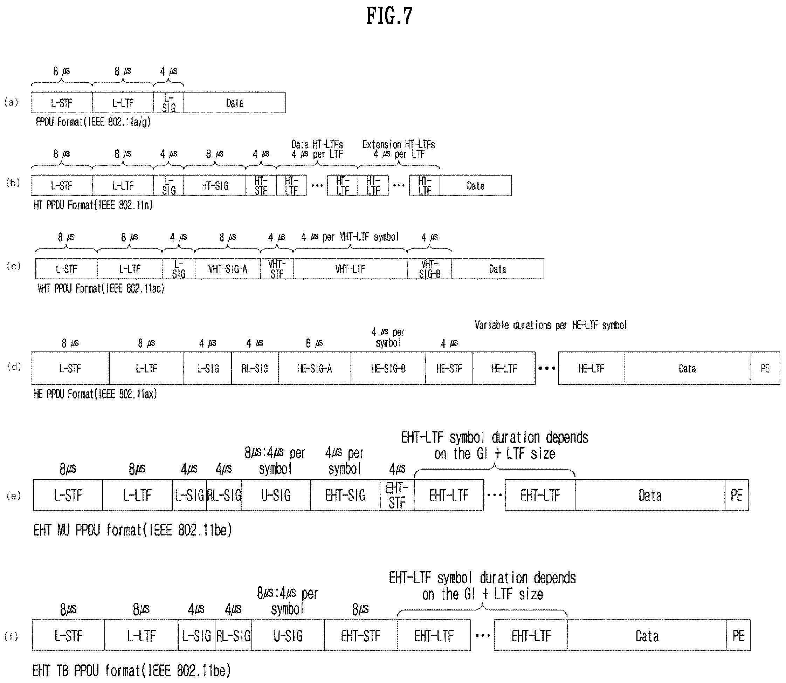

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802. 11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple access method for increasing spectrum efficiency

Hereinafter, a multiple access method that may be applied to the embodiments of the present disclosure is described.

Specifically, in order to increase efficient use of allocated channels and channel capacity, application of a non-orthogonal multiple access (NOMA) scheme and/or a semiorthogonal multiple access (SOMA) scheme may be considered.

For example, in the case of the NOMA method, an AP STA may share frequency resources, time resources, and/or code resources with each non-AP STA, thereby allowing a multiple access method to accommodate a number of STAs in limited resources by allocating non-orthogonal resources. In other words, this may mean a technology to improve frequency efficiency by simultaneously transmitting data for a number of STAs sharing the same resources.

For example, an AP STA may transmit data signals by superposing them to a plurality of non-AP STAs, i.e., non-AP STAs located in close proximity and non-AP STAs located in a distant location, with a large difference in channel quality. As a specific example, data for a first STA and data for a second STA may be transmitted in a superposed state on an IQ plane (In-phase and Quadrature plane), which corresponds to a complex plane.

In this regard, low power may be allocated to a non-AP STA located in close proximity, and high power may be allocated to a non-AP STA located in a remote area. In this case, the non-AP STA located in close proximity may be configured to preferentially decode and cancel an interference signal of a non-AP STA located in a remote area with a strong signal strength according to a successive interference cancellation (SIC) technique, and then successfully demodulate its own signal. Additionally, the non-AP STA located in a distant location may be configured to regard the interference signal of the non-AP STA located in close proximity as interference since it arrives relatively weakly, and to demodulate its own signal.

For another example, in the case of the SOMA method, data signals may be transmitted by allocating different powers to non-AP STAs located in close proximity and non-AP STAs located in a remote area, similar to the transmission method according to the aforementioned NOMA method.

However, unlike the NOMA method, in the case of the SOMA method, the SIC technique is not applied at the non-AP STA level when decoding the signal. Instead, decoding can be performed according to a superposed constellation based on gray code.

For example, the SOMA scheme is not only a superposition of two constellations of a close-by non-AP STA and a far-off non-AP STA, but also may utilize the property of more/less reliable bits in the constellations to schedule the close-by non-AP STA and the far-off non-AP STA.

In this regard, for the SOMA method, information on the power level for the superposed constellation and information on the bit position for each non-AP STA may be required.

As a specific example, the bits for the non-AP STAs located in close proximity may be defined/configured to correspond to the bits arranged in the front, and the bits for the non-AP STAs located in a remote area may be defined/configured to correspond to the bits arranged in the back. Alternatively, the bits for the non-AP STAs located in close proximity may be defined to correspond to the odd-numbered bits, and the bits for the non-AP STAs located in a remote area may be defined to correspond to the even-numbered bits. A case in which the opposite is defined/configured to the above-described example is not excluded.

In this case, a non-AP STA located in close proximity may demodulate the received data signal using MCS information for the superposed constellation, extract only its own bit(s), and perform decoding of its own codeword based on this. On the other hand, a non-AP STA located in a remote area decodes its own signal, and may regard the signal for the non-AP STA located in close proximity as noise due to the superpositioning.

### A multi-layer transmission (MLT) method for superpositioning and transmitting signals to multiple STAs

In next-generation wireless LAN systems (e.g., UHR, next wi-fi after 802.11 be, etc.), transmission and reception of signals using extended BW (e.g., 480 MHz, 560 MHz, 640 MHz, etc.) may be considered.

However, signal transmission and reception for extended BW may not be guaranteed due to UNII (unlicensed national information infrastructure) bandwidth allocation and regulation restrictions.

Therefore, in order to efficiently use the allocated channel and increase the channel capacity, multi-layer transmission (MLT) that transmits signals using the non-orthogonal multiple access scheme (e.g., NOMA, SOMA, etc.) described above in the next-generation wireless LAN system may be considered. Specifically, MLT may mean a method of superpositioning and transmitting signals for multiple STAs to one resource without time and/or frequency distinction using the non-orthogonal multiple access scheme.

Taking these points into consideration, the present disclosure proposes, through various examples, a method of transmitting/configuring/indicating MLT-related information to each STA when transmitting data for multiple STAs in a superpositioning method via MLT.

In the present disclosure, for the sake of clarity of explanation, MLT for two STAs is used as a representative example, but the proposed method in the present disclosure may be extended and applied to MLT for a larger number of STAs.

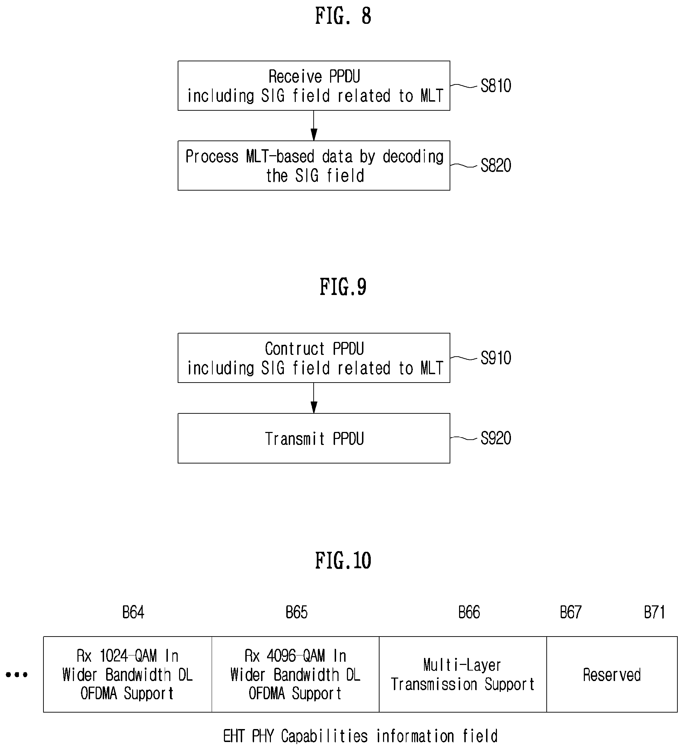

FIG. 8 is a drawing for explaining the operation of the first STA in the MLT operation according to the present disclosure.

In the example of FIG. 8, the first STA may correspond to a non-AP STA, and the second STA may correspond to an AP STA.

In step S810, the first STA may receive a PPDU including a SIG field related to MLT from the second STA.

Here, the SIG field may include information indicating whether MLT is applied. In this regard, information indicating whether MLT is applied may be included in a common field of the SIG field.

For example, the aforementioned SIG field may correspond to the EHT variant SIG field. At this time, information indicating whether MLT is applied may be configured as 1 bit and defined to indicate the MLT or MU-MIMO transmission.

In step S820, the first STA may process MLT-based data by decoding the SIG field.

Here, the operation of processing MLT-based data may mean an operation of receiving and decoding MLT-based data based on information obtained by decoding the SIG field.

At this time, when MLT is applied, the user field for the first STA included in the SIG field may include at least one subfield for processing MLT-based data.

For example, at least one subfield may include a first subfield indicating information on a modulation order applied to the MLT-based data, wherein the modulation order may correspond to one of QPSK, 16QAM, 64QAM, and 256QAM.

Additionally or alternatively, at least one subfield may include a second subfield indicating spatial stream related information for the MLT. In this regard, the spatial stream related information may be set to the same value for multiple STAs associated with the MLT.

Additionally or alternatively, at least one subfield may include a third subfield indicating location-related information of the first STA, wherein the location-related information may be defined to indicate one of a near STA or a far STA according to the MLT.

Additionally or alternatively, at least one subfield may include a fourth subfield indicating a bit position for the first STA among a plurality of constellation bits of the MLT-based data. As an example, the bit position for the first STA may correspond to an odd bit or an even bit among the plurality of constellation bits. As another example, the bit position for the first STA may correspond to a bit located at the front or a bit located at the back of the plurality of constellation bits.

Additionally or alternatively, at least one subfield may include a fifth subfield indicating information on a power allocation factor applied to the MLT.

Additionally or alternatively, at least one subfield may include a sixth subfield indicating information on an interference level for the MLT. In this regard, the information on the interference level may include information on a modulation order applied to MLT-based data for another STA that is transmitted superposed on the MLT-based data.

Additionally or alternatively, with respect to the procedures in FIG. 8, when MLT-based data is transmitted via OFDMA scheme, information/subfield indicating either MLT or normal OFDMA transmission may be further included in the user field for the first STA.

Additionally or alternatively, the MLT-based data in step S820 may be received from a specific resource unit (RU). Here, the specific RU may be identified by decoding the RU allocation subfield for MLT in the common field of the SIG field based on the value of the information indicating whether MLT is applied. For example, if it is indicated that MLT is applied, the first STA may recognize that the RU allocation subfield is for MLT, and may decode the RU allocation subfield accordingly.

In this regard, the RU allocation subfield for MLT may be defined to indicate one of the RU candidates consisting of a RU larger than or equal to 242 tone-RU size or a multiple RU (MRU).

The method performed by the first STA described in the example of FIG. 8 may be performed by the first device (100) of FIG. 1. For example, one or more processors (102) of the first device (100) of FIG. 1 may be configured to receive a PPDU including a SIG field related to MLT from a second STA (200) through one or more transceivers (106), and decode the corresponding SIG field to perform MLT-based data processing.

For example, one or more processors (102) of the first device (100) may decode fields included in a SIG field within a received PPDU. For example, the SIG field may include a common field and multiple user fields for multiple STAs.

As a specific example, one or more processors (102) may be configured to decode MLT indication information included in the common field and/or the user field to determine whether the corresponding PPDU transmission is in accordance with the MLT. If it is determined to be in accordance with the MLT, the one or more processors (102) may be configured to decode a resource allocation subfield (RU allocation subfield) in the common field to determine a resource (e.g., RU/MRU) to which MLT-based data is to be transmitted. In this regard, the one or more processors (102) may be configured to decode at least one subfield indicating MLT-related information included in the user field for the first STA. Thereafter, the one or more processors (102) may be configured to receive and decode the corresponding MLT-based data using the determined resource and MLT-related information.

Furthermore, one or more memories (104) of the first device (100) may store commands for performing the method described in the example of FIG. 8 or the examples described below when executed by one or more processors (102).

FIG. 9 is a drawing for explaining the operation of the second STA in the MLT operation according to the present disclosure.

In the example of FIG. 9, the first STA may correspond to a non-AP STA, and the second STA may correspond to an AP STA.

In step S910, the second STA may configure a PPDU including a SIG field related to MLT.

Here, the SIG field may include information indicating whether MLT is applied. In this regard, information indicating whether MLT is applied may be included in a common field of the SIG field. Additionally, based on whether MLT is applied, the user field for the first STA included in the SIG field may include at least one subfield for processing MLT-based data.

In step S920, the second STA may transmit the configured PPDU to the first STA.

In the example of Fig. 9, the information indicating whether to apply MLT, the specific configuration of the SIG field, that is, the specific configuration of the common field and the user field, etc. are the same as those described in the example of Fig. 8, so redundant description is omitted.

The method performed by the second STA described in the example of FIG. 9 may be performed by the second device (200) of FIG. 1. For example, one or more processors (202) of the second device (200) of FIG. 1 may be configured to configure a PPDU including a SIG field related to MLT and transmit the configured PPDU to the first STA (100) via one or more transceivers (206).

For example, one or more processors (202) of the second device (200) may be configured to configure a SIG field including a common field and multiple user fields for multiple STAs.

As a specific example, one or more processors (202) may be configured to encode MLT indication information in the common field and/or the user field to configure/indicate the first STA whether the corresponding PPDU transmission is MLT-compliant. If the MLT-based PPDU transmission is performed, the one or more processors (202) may be configured to encode a resource allocation subfield (RU allocation subfield) in the common field to set/instruct a resource (e.g., RU/MRU) to be transmitted with MLT-based data. In this regard, the one or more processors (202) may be configured to encode at least one subfield indicating MLT-related information included in the user field for the first STA. Through this, the one or more processors (202) may be configured to configure/indicate the first STA to receive and decode MLT-based data by using the corresponding resource and MLT-related information.

Furthermore, one or more memories (204) of the second device (200) may store instructions for performing the method described in the example of FIG. 9 or the examples described below when executed by one or more processors (202).

The examples of FIGS. 8 and 9 may correspond to some of the various examples of the present disclosure. Hereinafter, various examples of the present disclosure, including the examples of FIGS. 8 and 9, will be described.

The embodiments in the present disclosure are separated for clarity of explanation, and one or more embodiments may be combined and applied when performing the MLT method in the present disclosure.

### Embodiment 1

This embodiment relates to a method for indicating/identifying whether multi-layer transmission (MLT) is supported.

In order to transmit signals through a single resource (e.g., RU/MRU) by superpositioning signals of users (i.e., STAs) using MLT, an AP STA (hereinafter referred to as AP) can check whether non-AP STAs (hereinafter referred to as STAs) support MLT through the procedure described below.

The AP may transmit a beacon frame including relevant information to the STA to indicate whether MLT is supported. For example, the beacon frame may be transmitted including an MLT capabilities field.

Here, the MLT capabilities field indicates that an MLT capabilities element exists, and the MLT capsabilities element may be configured to include information required for the MLT.

For example, an MLT capability element may be configured to include one or more of the following information for an MLT:
- Information on supported modulation levels (e.g., QPSK, 16QAM, 64QAM, 256QAM, etc.)
- Power allocation information
- Non-orthogonal multiple access type information (e.g., NOMA, SOMA, etc.)
- successive interference cancelation (SIC) support information

Alternatively, rather than configuring a separate capability field for MLT support as described above, MLT support may be indicated using a capabilities element. In this case, the capability for MLT support may be transmitted using a capabilities element as in the following example.

For example, if MLT is available for transmission to EHT STA and its subsequent variants (e.g., UHR, Next wi-fi, etc.) STAs, the AP may use the EHT capabilities element to indicate whether it supports MLT, including EHT STAs.

In this regard, whether MLT is supported may be indicated through an MLT support subfield, and the subfield may be included in an EHT PHY capabilities information field within an EHT capabilities element.

FIG. 10 illustrates a format for an EHT PHY capabilities information field according to an embodiment of the present disclosure.

Referring to FIG. 10, the MLT support subfield may be indicated by assigning one bit from among the reserved bits B66 to B71 of the EHT PHY capabilities information field.

For example, B66 may be used for the subfield as illustrated in FIG. 10. Setting the subfield to a value of 1 may indicate MLT support or MLT availability. On the other hand, setting the subfield to a value of 0 may indicate MLT non-support.

As another example, if MLT is available only for transmission to subsequent variant STAs (e.g., UHR, Next wi-fi, etc.) rather than EHT STAs, the subsequent variant capabilities element may be used to indicate whether MLT is supported.

To indicate whether MLT is supported, the MLT support subfield may be transmitted in the subsequent variant PHY capabilities information field within the subsequent variant capabilities element.

For example, the subfield may consist of 1 bit. Setting the subfield to a value of 1 may indicate MLT support or MLT availability. On the other hand, setting the subfield to a value of 0 may indicate MLT non-support.

As in the examples described above, information on whether MLT is supported may be set in the form of capabilities information, and the information may be indicated when performing an association or negotiation procedure between an AP and a STA. In this regard, information on whether MLT is supported may be included in at least one of an association request frame, an association response frame, a probe request frame, and a probe response frame.

### Embodiment 2

This embodiment relates to a method for allocating resources on which the MLT directed as described above is performed.

That is, as described above, a method for performing RU/MRU allocation to superpose and transmit signals of users (i.e., STAs) using MLT is proposed.

In this regard, since the allocation of sub-channel units has a higher gain in terms of MLT efficiency than the allocation of small size RU units, a method of applying the MLT of the present disclosure to a 242-tone RU size or larger by considering large size RU allocation may be considered.

Therefore, although the present disclosure describes that the RU size for MLT is applied to RUs of 242-tone or larger, it is not excluded that the proposed method of the present disclosure is applied to RUs of a size smaller than 242-tone.

In the present disclosure, RU allocation may be considered in a manner in which MLT is applied to one RU/MRU to superpose and transmit user information.

MLT may correspond to a method of transmitting information on multiple users by superpositioning them using a single resource without distinction of time and frequency. In this respect, the MLT method may be similar to a method of transmitting information on multiple users based on multiple user-multiple input and multiple output (MU-MIMO) in existing wireless LAN systems (e.g., 802.11 ax, 802.11 be, etc.).

In consideration of these points, resource allocation for MLT in the present disclosure may be indicated/performed based on one or more of the following methods.

### (Method 2-1)

First, a method for performing RU allocation for MLT using the RU allocation subfield defined in an existing wireless LAN system (e.g., 802.11 be) is proposed.

Here, the RU allocation subfield may be information included in a common field within the EHT-SIG field (e.g., see Fig. 7(e)).

In this case, since the existing RU allocation subfield is used, the existing RU allocation subfield for MU-MIMO may be reused without having to newly define a RU allocation subfield for MLT.

For example, for MLT RU allocation, the xxxxxxy2y1y0 allocation subfield defined for MU-MIMO transmission may be used.

Here, y2yly0 may indicate the number of user fields signaled in the corresponding content channel, i.e., EHT-SIG. Accordingly, since the number of users superposed through the MLT proposed in the present disclosure is 2, y2y1y0 of the RU allocation subfield used when performing MLT may always be set to '010'. In this regard, when the EHT-SIG for MLT is configured with a non-OFDMA common field, the value of the number of MU-MIMO users subfield included in the common field of the corresponding EHT SIG may always be indicated as a value indicating that the number of users is 2 (e.g., 1, i.e., the number of users - 1).

When reusing an existing RU allocation subfield in this manner, there is no need to define a new RU allocation subfield, which has the effect of reducing signaling overhead.

Since the method uses the same RU allocation subfield as MU-MIMO, it needs to be separately indicated that the RU allocation is for MLT. For this purpose, the MLT indication may be performed using the common field of EHT SIG.

For example, the MLT indication may be performed using the Disregard bit of the common field of EHT SIG, and one bit from B13 to B16 may be used for the indication. As a specific example, B13 or B16 may be used as 1 bit for the MLT indication.

Additionally, unlike the above, a case may be considered where MU-MIMO transmission and MLT are performed together for one RU. In this case, RU allocation and MLT indication may be performed as in the following example.

For example, RU allocation for MU-MIMO transmission and MLT may be performed using the existing RU allocation subfield for MU-MIMO. That is, definition of a separate RU allocation subfield may be unnecessary. The transmission may be configured/defined to be applied to RU/MRU of 242-tones or more, or to a bandwidth of a certain size (e.g., 20 MHz) or more.

The total number of users (i.e., STAs) transmitted through the RU may be limited to 4 to 8 (i.e., 4 or more and 8 or less). At this time, the value of the number of the MU-MIMO users subfield included in the common field of EHT-SIG may be set to a value of 3 to 7. In this regard, since the number of users superpositioning through MLT is 2 and the maximum number of users transmitted through MU-MIMO is 8, y2y1y0 of the RU allocation field used in MU-MIMO transmission and MLT transmission may always be set to one of 011, 100, 101, 110, and 111.

Additionally, since the transmission is indicated through the same RU allocation, the user field may be configured to include an MLT indication subfield for indicating to a user receiving a signal through MLT. As an example, the MLT indication subfield may be configured with 1 bit, where a value of 1 may indicate that MLT is performed, and a value of 0 may indicate that MLT is not performed. The 1 bit may also be configured in the opposite case to the above example.

### (Method 2-2)

Next, a method for performing RU allocation by defining a new RU allocation subfield for MLT (hereinafter, MLT RU allocation subfield) is proposed. The RU allocation subfield may be allocated and used only during MLT.

Here, the MLT RU allocation subfield may be information included in a common field within the EHT-SIG field (e.g., see Fig. 7(e)).

For example, the MLT RU allocation subfield may be configured using reserved fields of the RU allocation subfield defined in existing wireless LAN systems (e.g., 802.11 be).

In this case, since the MLT may be applied to RU/MRU larger than 242-tone RU size as described above, the RU allocation subfield may be defined to indicate the following RU size candidates. For example, the RU size candidates may include 242-tone RU, 484-tone RU, 484+242-tone MRU, 996-tone RU, 996+484-tone MRU, 996+484+242-tone MRU, 2×996-tone RU, 2×996+484-tone MRU, 3×996-tone RU, 3 × 996+484-tone MRU, 4×996-tone RU.

In this regard, considering the existing RU allocation method, even in MLT, the RU size mentioned above may be used without indicating it, and the size may be used by using a method such as full bandwidth or MU-MIMO operation.

Additionally, the MLT RU allocation subfield may be configured such that two user fields are always allocated/included for the corresponding RU. That is, two user fields for the MLT RU allocation subfield may always exist in a paired manner. In this case, when the corresponding RU allocation subfield is transmitted, a subsequent variant (e.g., UHR, Next wi-fi) STA or MLT capable STA that receives it may recognize that two user fields are allocated for the corresponding RU.

For another example, the MLT RU allocation subfield may be defined separately from the RU allocation subfield defined in existing wireless LAN systems (e.g., 802.11 be), thereby indicating RU allocation for MLT.

In this regard, it is necessary to separately indicate that the corresponding RU allocation is for MLT. For this purpose, the MLT indication may be performed using the common field of EHT SIG. For example, the MLT indication may be performed using the Disregard bit of the common field of EHT SIG, and one bit from B13 to B16 may be used for the indication. As a specific example, B13 or B16 may be used as 1 bit for the MLT indication.

Through the MLT indication, the subsequent variant (e.g. UHR, Next wi-fi) STA or MLT capable STA may be aware of the MLT and may be aware that the RU allocation subfield is for RU allocation for the MLT.

RU allocation for MLT may be configured separately from the existing RU allocation.

Since MLT may be applied to RU/MRU larger than 242-tone RU size, the MLT RU allocation subfield may be defined to indicate the following RU size candidates. For example, the RU size candidates may include 242-tone RU, 484-tone RU, 484+242-tone MRU, 996-tone RU, 996+484-tone MRU, 996+484+242-tone MRU, 2×996-tone RU, 2×996+484-tone MRU, 3 × 996-tone RU, 3 × 996+484-tone MRU, 4×996-tone RU.

Additionally, considering the aforementioned RU size candidates, i.e., available RU/MRU sizes, the MLT RU allocation subfield may be configured with a different size from the existing RU allocation subfield.

As an example, the MLT RU allocation subfield may consist of 4 bits for a 20 MHz content channel.

Table 1 illustrates a 4-bit MLT RU allocation subfield.

**[Table 1]**

| RU Allocation subfield (B3 B2 B1 BO) | RU size | Number of User |
|---|---|---|
| 0000 | 242 | 2 |
| 0001 | 484 | 2 |
| 0010 | 484+242 | 2 |
| 0011 | 996 | 2 |
| 0100 | 996+484 | 2 |
| 0101 | 996+484+242 | 2 |
| 0110 | 2×996 | 2 |
| 0111 | 2×996+484 | 2 |
| 1000 | 3×996 | 2 |
| 1001 | 3×996+484 | 2 |
| 1010 | 4×996 | 2 |
| 1011~1111 | Reserved | |

In this regard, the 4×996-tone RU size in Table 1 may be replaced with Reserved.

The RU size and allocation for MLT as described above are examples, and when the bandwidth of the next-generation wireless LAN system is extended beyond 320 MHz, the corresponding MLT RU allocation subfield may be extended to 5 bits or 6 bits.

When a new MLT RU allocation subfield is defined, the user fields for the MLT RU allocation subfield may always exist in pairs of two. That is, the MLT RU allocation subfield may be configured so that two user fields are always allocated/included in the corresponding RU.

### Embodiment 3

This embodiment relates to a method for configuring MLT indication and MLT-related user fields.

As described above, MLT may correspond to a method of transmitting information on multiple users by superpositioning them using a single resource without distinction of time and frequency. In this respect, the MLT method may be similar to a method of transmitting information on multiple users based on multiple user-multiple input and multiple output (MU-MIMO) in existing wireless LAN systems (e.g., 802.11 ax, 802.11 be, etc.).

Taking these points into consideration, the MLT proposed in the present disclosure may be performed based on one or more of the following methods.

### (Method 3-1)

A method for indicating MLT related information using a non-OFDMA transmission method for multiple users is proposed.

MLT may be considered as an MU-MIMO scheme with occupied bandwidth (occupied BW), and signaling for the MLT may be configured as follows.

MLT related information may be transmitted via EHT SIG or subsequent variants (e.g. UHR, Next wi-fi) SIG.

The proposed method in the present disclosure is explained using the configuration of EHT SIG as a representative example for the sake of clarity of explanation. In this regard, the proposed method in the present disclosure may be equally extended and applied in a newly configured/defined subsequent variant (e.g., UHR, Next wi-fi) SIG by using different bits of the same field.

First, in order to indicate MLT, information on the MLT indication may be included in the EHT SIG, and the MLT indication may be performed using the common field of the EHT SIG.

For example, the MLT indication may be performed using the Disregard bit of the common field of EHT SIG, and one bit from B13 to B16 may be used for the indication. As a specific example, B13 may be used as an MLT subfield or an MLT support subfield, and a value of 1 may indicate that MLT is applied, and a value of 0 may indicate that MLT is not applied.

The MLT indication may be pre-indicated to change and apply the user information field (rephrasing), and the MCS subfield and the spatial configuration subfield may be reinterpreted or newly configured according to the indication.

In this regard, when MLT is applied/performed, the number of non-OFDAM users included in the common field of EHT SIG may always be set to 2 and transmitted.

Next, when MLT is applied/performed, we propose the contents of configuring the user field for MLT within the EHT SIG by referring to the user field format for MU-MIMO allocation of EHT variants.

A user field for MLT may be configured with one or more combinations of the subfields described below.

### 1) MCS subfield

Since QPSK, 16QAM, 64QAM, and 256QAM are considered in MLT, the MCS subfield may be configured/allocated with 2 bits to indicate the corresponding modulation method. For example, the 2 bits may be configured as '00' for QPSK, '01' for 16QAM, '10' for 64QAM, and '11' for 256QAM.

Additionally, considering the extension of the modulation order for MLT, the MCS subfield may consist of 3 bits.

### 2) Nss subfield

The Nss subfield may be defined to indicate the number of spatial streams (ss). The Nss subfield may be a rephrase of the existing spatial configuration subfield (6 bits).

Unlike MU-MIMO transmission, in the case of MLT, since the same Nss value is used for transmission to multiple STAs, the Nss included in each user field for multiple STAs may be set to the same information.

For example, when applying/performing MLT, the Nss allocated to the STA may be limited to 1 or 2, and the Nss subfield may be configured with 1 bit to indicate the corresponding information. When configured with 1 bit, '0' may indicate 1 spatial stream, and '1' may indicate 2 spatial streams. Additionally, considering the extension of Nss, the corresponding Nss subfield may be configured with 2 bits or 3 bits.

### 3) Near/Far indication subfield

The Near/Far indication subfield may be utilized for all transmissions of multiple access methods (e.g., NOMA, SOMA, etc.) described in the present disclosure, and may be information indicating the position at which an STA exists when applying/performing MLT.

The Near/Far indication subfield may consist of 1 bit. For example, if it consists of 1 bit, it may be defined so that '0' indicates Near STA and '1' indicates Far STA.

### 4) Bit label subfield

The bit label subfield may indicate information on which bit among the constellation bits of the signal received through the MLT the corresponding STA will use. The corresponding subfield may be required in the case of the SOMA method among multiple access methods, but may be unnecessary in the case of the NOMA method.

For example, when transmission using 16QAM is performed in MLT, the bit label subfield may be utilized to indicate information on which bit (b1, b3) or (b2, b4) the MLT receiving STA should demodulate/decode in the received signal. Additionally or alternatively, the bit label subfield may be utilized to indicate information on whether a bit is reliable or not.

For the above-mentioned indication, the bit label subfield may consist of 1 bit. For example, '0' may be defined to indicate the odd/reliable/first bit, and '1' may be defined to indicate the even/less reliable/second bit.

### 5) Power allocation factor subfield

The power allocation element subfield may indicate power adaptation information applied to the MLT.

For example, the power allocation element subfield may consist of 2 bits or 3 bits. Additionally, the power adaptation information may be determined/set to 2 or 3 values for each modulation order.

### 6) Interference level indication subfield

The interference level indication subfield may indicate information on the modulation order applied to another STA that is superposed and transmitted when applying/performing MLT.

The interference level indication subfield may consist of 2 bits to indicate QPSK, 16QAM, 64QAM, and 256QAM, similar to the MCS subfield.

An MLT receiving STA may improve successive interference cancellation (SIC) performance when performing reception according to MLT by using the corresponding subfield.

### (Method 3-2)

A method for indicating MLT-related information by considering MLT as one of the OFDMA transmission methods is proposed.

MLT related information may be transmitted via EHT SIG or subsequent variants (e.g., UHR, Next wi-fi) SIG.

The proposed method in the present disclosure is explained using the configuration of EHT SIG as a representative example for the sake of clarity of explanation. In this regard, the proposed method in the present disclosure may be equally extended and applied in a newly established/defined subsequent variant (e.g., UHR, Next wi-fi) SIG by using different bits of the same field.

First, in order to indicate that MLT is performed in OFDMA transmission, the indication of whether MLT is performed may be performed using the common field of EHT SIG.

For example, the MLT indication may be performed using the Disregard bit of the common field of EHT SIG, and one bit from B13 to B16 may be used for the indication. As a specific example, B13 may be used as an MLT indication/support subfield, and a value of 1 may indicate that MLT is performed, and a value of 0 may indicate that MLT is not performed.

As described above, since information on the MLT instruction is transmitted through a common field, all STAs participating in OFDMA transmission may confirm/check whether MLT is performed during OFDMA through the corresponding subfield.

Next, a configuration for the user field for an STA performing MLT when MLT is applied/performed via OFDMA is proposed.

Similar to the MU-MIMO scheme described above, MLT may be considered as a case where it is performed using some RU/MRU during OFDMA transmission. In this case, the user field for MLT may be configured by referring to the user field format for MU-MIMO allocation of EHT variants, as in the previous method (i.e., method 3-1).

Alternatively, the user field for a STA performing MLT may be configured with reference to the user field format for non-MU-MIMO allocation of EHT variants.

In this case, the user field may be configured to include an MLT subfield to indicate that the STA performs MLT to receive data. The subfield name is an example and may be replaced with another name. As an example, the MLT subfield may be configured using B15, which is a reserved bit of the user field. In this case, '1' may be defined to indicate that the STA receives data via MLT, and '0' may be defined to indicate normal OFDMA transmission.

To indicate MLT related information, the user field may be composed of a combination of one or more of the subfields described below.

### 1) MCS subfield

Since QPSK, 16QAM, 64QAM, and 256QAM are considered in MLT, the MCS subfield may be configured/allocated with 2 bits to indicate the corresponding modulation method. For example, the 2 bits may be configured as '00' for QPSK, '01' for 16QAM, '10' for 64QAM, and '11' for 256QAM.

Additionally, considering the extension of the modulation order for MLT, the MCS subfield may consist of 3 bits.

### 2) Nss subfield

The Nss subfield may be defined to indicate the number of spatial streams (ss). The Nss subfield may be a rephrase of the existing spatial configuration subfield (6 bits).

Unlike MU-MIMO transmission, in the case of MLT, since the same Nss value is used for transmission to multiple STAs, the Nss included in each user field for multiple STAs may be set to the same information.

For example, when applying/performing MLT, the Nss allocated to the STA may be limited to 1 or 2, and the Nss subfield may be configured with 1 bit to indicate the corresponding information. When configured with 1 bit, '0' may indicate 1 spatial stream, and '1' may indicate 2 spatial streams. Additionally, considering the extension of Nss, the corresponding Nss subfield may be configured with 2 bits or 3 bits.

### 3) Near/Far indication subfield

The Near/Far indication subfield may be utilized for all transmissions of multiple access methods (e.g., NOMA, SOMA, etc.) described in the present disclosure, and may be information indicating the position at which an STA exists when applying/performing MLT.

The Near/Far indication subfield may consist of 1 bit. For example, if it consists of 1 bit, it may be defined so that '0' indicates Near STA and '1' indicates Far STA.

### 4) Bit label subfield

The bit label subfield may indicate information on which bit among the constellation bits of the signal received through the MLT the corresponding STA will use. The corresponding subfield may be required in the case of the SOMA method among multiple access methods, but may be unnecessary in the case of the NOMA method.

For example, when transmission using 16QAM is performed in MLT, the bit label subfield may be utilized to indicate information on which bit (b1, b3) or (b2, b4) the MLT receiving STA should demodulate/decode in the received signal. Additionally or alternatively, the bit label subfield may be utilized to indicate information on whether the bit is reliable or not.

For the indication as described above, the bit label subfield may consist of 1 bit. For example, '0' may be defined to indicate the odd/reliable/first bit, and '1' may be defined to indicate the even/less reliable/second bit.

### 5) Power allocation factor subfield

The power allocation element subfield may indicate power adaptation information applied to the MLT.

For example, the power allocation element subfield may consist of 2 bits or 3 bits. Additionally, the power adaptation information may be determined/set to 2 or 3 values for each modulation order.

### 6) Interference level indication subfield

The interference level indication subfield may indicate information on the modulation order applied to another STA that is superposed and transmitted when applying/performing MLT.

The interference level indication subfield may consist of 2 bits to indicate QPSK, 16QAM, 64QAM, and 256QAM, similar to the MCS subfield.

An MLT receiving STA may improve SIC performance when performing reception according to MLT by using the corresponding subfield.

### (Method 3-3)

A method to newly define a subsequent variant (e.g., UHR, Next wi-fi) SIG field for MLT is proposed. Here, the subsequent variant SIG field may be composed of a common field and a user field (i.e., a user-specific field).

In this regard, information for indicating the STA on the configuration of the subsequent variant SIG field for MLT needs to be indicated through the SIG field transmitted and received prior to the corresponding SIG field.

For example, the information may be defined as a transmission type field. The transmission type field may consist of 2 bits or 3 bits and may be used to indicate various transmission modes such as MU-MIMO, OFDMA, MLT, SU, NDP, etc.

Specifically, to indicate MLT related information, the subsequent variant SIG field for MLT may be configured as follows.

First, the common field included in the SIG field may be composed of a combination of one or more of the subfields described below.

### 1) Power allocation factor subfield

The power allocation element subfield may indicate power adaptation information applied to the MLT.

For example, the power allocation element subfield may consist of 2 bits or 3 bits. Additionally, the power adaptation information may be determined/set to 2 or 3 values for each modulation order.

### 2) RU/MRU allocation subfield for MLT

The subfield may indicate information on the RU/MRU on which MLT is performed.

For example, the subfield may correspond to an RU allocation subfield for an MLT configured based on one or more of the methods described in Embodiment 2 of the present disclosure.

Next, the user field included in the corresponding SIG field may be configured with a combination of one or more of the subfields described below.

### 1) Association ID (AID) 12 subfield

The AID 12 subfield may indicate identification information for the STA performing the MLT.

### 2) MCS subfield

The MCS subfield may indicate the modulation order used in the MLT.

For example, the MCS subfield may indicate QPSK, 16QAM, 64QAM, and/or 256QAM that may be considered for MLT. As a specific example, if the MCS subfield consists of 2 bits, it may be configured as '00' for QPSK, '01' for 16QAM, '10' for 64QAM, and '11' for 256QAM.

### 3) Nss subfield

The Nss subfield may indicate the number of spatial streams (ss) used when applying/performing MLT.

For example, the Nss subfield may consist of 1 bit or 2 bits. If the Nss subfield consists of 2 bits, up to 4 spatial streams may be supported for MLT.

### 4) Near/Far indication subfield

The Near/Far indication subfield may be utilized for all transmissions of multiple access methods (e.g., NOMA, SOMA, etc.) described in the present disclosure, and may be information indicating the position at which an STA exists when applying/performing MLT.

The Near/Far indication subfield may consist of 1 bit. For example, if it consists of 1 bit, it may be defined so that '0' indicates Near STA and '1' indicates Far STA.

### 5) Bit label subfield

The bit label subfield may indicate information on which bit among the constellation bits of the signal received through the MLT the corresponding STA will use. The corresponding subfield may be required in the case of the SOMA method among multiple access methods, but may be unnecessary in the case of the NOMA method.

For example, when transmission using 16QAM is performed in MLT, the bit label subfield may be utilized to indicate information on which bit (b1, b3) or (b2, b4) the MLT receiving STA should demodulate/decode in the received signal. Additionally or alternatively, the bit label subfield may be utilized to indicate information on whether the bit is reliable or not.

For the above-mentioned instructions, the bit label subfield may consist of 1 bit. For example, '0' may be defined to indicate the odd/reliable/first bit, and '1' may be defined to indicate the even/less reliable/second bit.

### 6) Interference level indication subfield

The interference level indication subfield may indicate information on the modulation order applied to another STA that is superposed and transmitted when applying/performing MLT.

The interference level indication subfield may consist of 2 bits to indicate QPSK, 16QAM, 64QAM, and 256QAM, similar to the MCS subfield.

An MLT receiving STA may improve SIC performance when performing reception according to MLT by using the corresponding subfield.

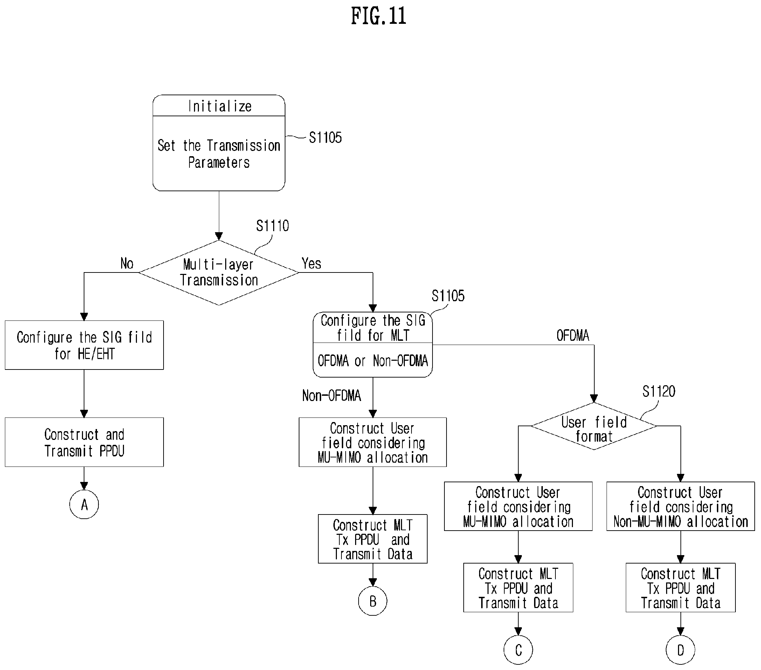

Hereinafter, transmission procedures and reception procedures for MLT based on Embodiments 1 to 3 of the present disclosure are specifically described through FIGS. 11, 12, and 13.

FIG. 11 illustrates an example of a transmission procedure for MLT according to the present disclosure.

The procedure described in Fig. 11 may correspond to an operation by an AP STA (hereinafter, "AP") that performs PPDU configuration and transmission.

The steps described in Fig. 11 are separated for clarity of explanation, and some steps may be omitted or multiple steps may be combined and applied.

Although not disclosed in FIG. 11, an AP may announce information on MLT to non-AP STA(s) (hereinafter, STA) within a BSS via a beacon frame.

The AP may set transmission parameters for signal transmission to STA(s) (S1105).

When transmitting a signal to STA(s), the AP may determine whether to transmit a signal using MLT depending on whether the STA supports MLT.

If the AP does not transmit a signal based on MLT in S1110, the AP may perform PPDU configuration and transmission using the previously defined HE/EHT variant PPDU procedure.

For example, in this case, the AP may configure the SIG field for the HE/EHT variant. Based on this, the AP may configure the PPDU for the HE/EHT variant and transmit it to the STA(s) (i.e., path A).

In contrast, when the AP transmits a signal based on MLT in S1110, the AP may configure an MLT-related SIG field (S1115). The SIG field may be configured with reference to the EHT SIG field, or may be newly defined.

For example, the MLT related SIG field may be configured using either the SIG field format for OFDMA transmission or the SIG field format for non-OFDMA transmission.

Specifically, when the AP configures the MLT-related SIG field based on the SIG field format for non-OFDMA transmission, the common field of the MLT-related SIG field may be configured to include an MLT indication subfield to indicate the STA whether to transmit MLT. In this case, the number of users (i.e., the number of STAs) for non-OFDMA transmission may be set to 2.

In this regard, the user field included in the MLT related SIG may be configured based on the MU-MIMO allocation method. For example, the user field may be configured to include an MCS subfield, an Nss subfield, a Near/Far subfield, a bit label subfield, a power allocation element subfield, an interference level indication subfield, etc. (e.g., see method 3-1).

In this case, the AP may transmit data to non-AP STA(s) using a PPDU including MLT-related information configured as described above (i.e., path B).

On the other hand, when the AP configures the MLT-related SIG based on the SIG field format for OFDMA transmission, the common field of the MLT-related SIG field may be configured to include an MLT indication subfield in order to indicate the STA whether to transmit MLT. In this case, a resource allocation subfield for MLT may also be included in the common field.

In this regard, the user field of the MLT related SIG may be configured based on a format considering MU-MIMO allocation or a format considering non-MU-MIMO allocation (S1120).

Specifically, if the AP configures the user field based on a format that takes MU-MIMO allocation into account, the user field may be configured in the same manner as in the B path described above (e.g., see method 3-2). In this case, the AP may transmit data to non-AP STA(s) using a PPDU including an MLT-related SIG configured in this manner (i.e., C path).

On the other hand, if the AP configures the user field based on a format considering non-MU-MIMO allocation, the user field may be configured to include an MLT subfield for MLT indication, an MCS subfield, an Nss subfield, a Near/Far subfield, a bit label subfield, a power allocation factor subfield, an interference level indication subfield, etc. (e.g., see method 3-2). In this case, the AP may transmit data to non-AP STA(s) using a PPDU including an MLT-related SIG configured in this manner (i.e., D path).

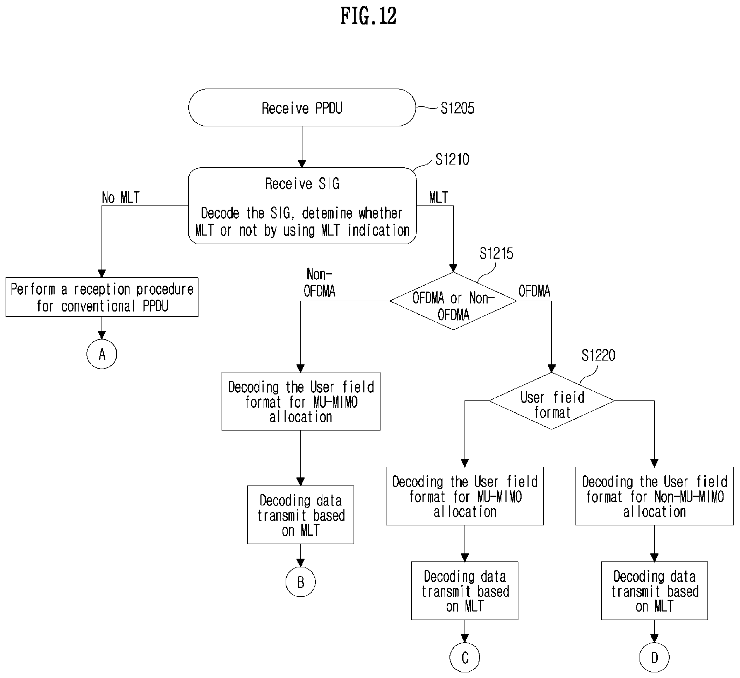

FIG. 12 illustrates an example of a receiving procedure for MLT according to the present disclosure.

The procedure described in FIG. 12 may correspond to an operation by a non-AP STA that receives a PPDU and performs data decoding.

The steps described in Fig. 12 are separated for clarity of explanation, and some steps may be omitted or multiple steps may be combined and applied.

A non-AP STA may receive a PPDU transmitted from an AP (S1205).

After receiving the corresponding PPDU, the non-AP STA may decode the SIG field included in the received PPDU to determine whether the corresponding PPDU is for MLT (S1210).

Specifically, if the PPDU is not for MLT, the non-AP STA may decode the data by performing the existing PPDU reception procedure (i.e., path A).

On the other hand, if it is confirmed/checked through the SIG field that the corresponding PPDU was transmitted using MLT, the non-AP STA may confirm whether the corresponding PPDU is based on OFDMA transmission or non-OFDMA (S1215).

If PPDU is transmitted using MLT using non-OFDMA transmission, non-AP STA may recognize that transmission information for MLT is configured based on a user field format considering MU-MIMO allocation. Non-AP STA may perform user field decoding for this to confirm/check information used by AP when applying/performing MLT. Through this, non-AP STA may obtain MCS information, Nss information, Near/Far information, bit label information, power allocation information, and interference level information.

Based on the information obtained through decoding the SIG field, non-AP STA(s) may decode data transmitted via MLT (i.e., path B).

If the PPDU is transmitted MLT using OFDMA transmission, the non-AP STA may confirm/check information on the allocated RU using the resource allocation field transmitted through the common field of the SIG field. The non-AP STA may determine whether the user field format is configured in consideration of MU-MIMO allocation or non-MI-MIMO allocation using the resource allocation (S1220).

If the transmission is performed via MU-MIMO allocation, the non-AP STA may confirm/check MLT-related information by decoding the user field format considering MU-MIMO allocation, and decode data transmitted via MLT based on this (i.e., path C).

On the other hand, if the transmission is performed via non-MU-MIMO allocation, the non-AP STA may confirm/check MLT-related information by decoding the user field format considering the non-MU-MIMO allocation, and decode the data transmitted via MLT based on this (i.e., D path).

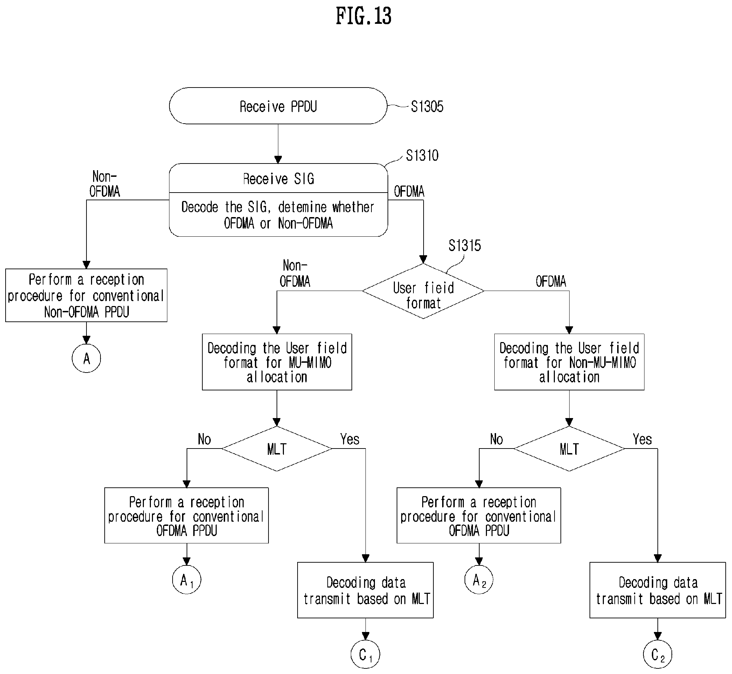

FIG. 13 illustrates another example of a receiving procedure for MLT according to the present disclosure.

The procedure described in FIG. 13 may correspond to an operation by a non-AP STA that receives a PPDU and performs data decoding.

Referring to FIG. 13, in contrast to the operation in FIG. 12, the operation may be for a receiving procedure in the case where MLT indication information is included in the user field, taking OFDMA transmission into consideration.

The steps described in Fig. 13 are separated for clarity of explanation, and some steps may be omitted or multiple steps may be combined and applied.

A non-AP STA may receive a PPDU transmitted from an AP (S1305).

After receiving the corresponding PPDU, the non-AP STA may decode the SIG field included in the received PPDU to determine whether the corresponding PPDU is non-OFDMA transmission or OFDMA transmission (S1310).

Specifically, in case of a PPDU based on non-OFDMA transmission, a non-AP STA may decode the PPDU by performing the existing receiving procedure (i.e., path A).

On the other hand, in the case of a PPDU based on OFDMA transmission, a non-AP STA may confirm/check the format of the received user field through the resource allocation field transmitted through the SIG field (S 1315).

If the format of the confirmed/checked user field is configured as a user field format that takes MU-MIMO allocation into account, a non-AP STA may decode the user field for MU-MIMO allocation to determine whether it is MLT.

If the MLT indication is not configured in the user field, the non-AP STA may recognize that the received data was not transmitted using MLT, and may perform data decoding using the existing receiving procedure (i.e., A₁ path).

In contrast, if the MLT instruction is configured in the user field, the non-AP STA may recognize that the received data is transmitted using MLT, and may perform data decoding using the MLT-related information obtained through decoding the user field (i.e., C₁ path).

On the other hand, if the format of the confirmed/checked user field is configured as a user field format considering non-MU-MIMO allocation, the non-AP STA may decode the user field for non-MU-MIMO allocation to determine whether it is MLT.

If the MLT indication is not configured in the user field, the non-AP STA may recognize that the received data was not transmitted using MLT, and may perform data decoding using the existing receiving procedure (i.e., A₂ path).

In contrast, if the MLT indication is configured in the user field, the non-AP STA may recognize that the received data is transmitted using MLT, and may perform data decoding using the MLT-related information obtained through decoding the user field (i.e., C₂ path).

In the existing wireless LAN system, MU-MIMO transmission is defined with respect to a method of supporting multiple users. The existing MU-MIMO transmission may correspond to a concept that is identical in terms of time/frequency but distinct in terms of spatial stream. In contrast, the proposed method in the present disclosure is about a SIG field design method for supporting multi-layer transmission for multiple users in one resource (i.e., RU/MRU) using the same spatial stream/tone.

According to the proposed method in the present disclosure, by superposing and transmitting data transmissions for multiple STAs, a new effect of increasing channel capacity for allocated bandwidth (BW) and/or resources (i.e., RU/MRU) may be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving a physical layer protocol data unit (PPDU) including a SIG field related to multi-layer transmission (MLT) from a second STA; and
processing MLT-based data by decoding the SIG field,
wherein the SIG field includes information indicating whether the MLT is applied, and
wherein, based on the MLT being applied, a user field for the first STA included in the SIG field includes at least one subfield for processing the MLT-based data.

2. The method of claim 1,
wherein the information indicating whether the MLT is applied is included in a common field of the SIG field.

3. The method of claim 1,
wherein the at least one subfield includes a first subfield indicating information on a modulation order applied to the MLT-based data, and
wherein the modulation order corresponds to one of quadrature phase shift keying (QPSK), 16 quadrature amplitude modulation (QAM), 64QAM, and 256QAM.

4. The method of claim 1,
wherein the at least one subfield includes a second subfield indicating spatial stream related information for the MLT.

5. The method of claim 4,
wherein the spatial stream related information is set to a same value for a plurality of STAs related to the MLT.

6. The method of claim 1,
wherein the at least one subfield includes a third subfield indicating position-related information of the first STA, and
wherein the position-related information corresponds to one of a near STA or a far STA according to the MLT.

7. The method of claim 1,
wherein the at least one subfield includes a fourth subfield indicating a bit position for the first STA among a plurality of constellation bits of the MLT-based data.

8. The method of claim 7,
wherein the bit position for the first STA corresponds to an odd bit or an even bit in the plurality of constellation bits, or
wherein the bit position for the first STA corresponds to a bit located in a front or a back of the plurality of constellation bits.

9. The method of claim 1,
wherein the at least one subfield includes a fifth subfield indicating information on a power allocation factor applied to the MLT.

10. The method of claim 1,
wherein the at least one subfield includes a sixth subfield indicating information on an interference level for the MLT.

11. The method of claim 10,
wherein the information on the interference level includes information on a modulation order applied to MLT-based data for another STA that is transmitted superposed on the MLT-based data.

12. The method of claim 1,
wherein, based on the MLT-based data being transmitted via an OFDMA method, information indicating either the MLT or general OFDMA transmission is included in the user field for the first STA.

13. The method of claim 1,
wherein the SIG field corresponds to an EHT variant SIG field, and
wherein the information indicating whether the MLT is applied is composed of 1 bit and is defined to indicate the MLT or MU-MIMO transmission.

14. The method of claim 1,
wherein the MLT-based data is received from a specific resource unit (RU), and
wherein the specific RU is identified by decoding an RU allocation subfield for the MLT in the common field of the SIG field based on a value of the information indicating whether the MLT is applied.

15. The method of claim 14,
wherein the RU allocation subfield indicates one of RU candidates configured with a RU or a multiple RU (MRU) larger than or equal to 242 tone-RU size.

16. An apparatus for a first station (STA) in a wireless local area network (WLAN) system, the apparatus comprising:
at least one transceiver; and
at least one processor connected to the at least one transceiver,
wherein the at least one processor is configured to:
receive a physical layer protocol data unit (PPDU) including a SIG field related to multi-layer transmission (MLT) from a second STA; and
process MLT-based data by decoding the SIG field,
wherein the SIG field includes information indicating whether the MLT is applied, and
wherein, based on the MLT being applied, a user field for the first STA included in the SIG field includes at least one subfield for processing the MLT-based data.

17. A method performed by a second station (STA) in a wireless LAN system, the method comprising:
constructing a physical layer protocol data unit (PPDU) including a SIG field related to multi-layer transmission (MLT); and
transmitting the PPDU to a first STA,
wherein the SIG field includes information indicating whether the MLT is applied, and,
wherein, based on the MLT being applied, a user field for the first STA included in the SIG field includes at least one subfield for processing MLT-based data.

18. An apparatus for a second station (STA) in a wireless local area network (WLAN) system, the apparatus comprising:
at least one transceiver; and
at least one processor connected to the at least one transceiver,
wherein the at least one processor is configured to:
construct a physical layer protocol data unit (PPDU) including a SIG field related to multi-layer transmission (MLT); and
transmit the PPDU to a first STA,
wherein the SIG field includes information indicating whether the MLT is applied, and,
wherein, based on the MLT being applied, a user field for the first STA included in the SIG field includes at least one subfield for processing MLT-based data.

19. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 15.

20. At least one non-transitory computer-readable medium storing at least one instruction, wherein:
the at least one instruction controls a device to perform a method according to any one claim of claims 1 to 15 in a wireless local area network (WLAN) system by being executed by at least one processor.
